# EUROPEAN PATENT APPLICATION

(11) **EP 1 099 525 A1**
(43) Date of publication of application: **16.05.2001**
(21) Application number: 00203871.9
(22) Date of filing: 06.11.2000
(51) Int. Cl.: B29B 7/90, B29B 9/14, B29B 7/46, B29B 7/60, B29C 47/10, B29C 31/02, B29B 17/00

(54) **Method for forming mixtures of synthetic resin and reinforcing fibres**

(30) Priority: 10.11.1999 IT RE990111
(71) Applicant: FERIOLI FILIPPO S.r.l., I-21055 Gorla Minore (Varese) (IT); Virginio Schiaretti Societa'per Azioni, 43010 Fontanini (Parma) (IT)
(72) Inventor: Rossi, Albino, 21055 Gorla Minore, (Varese) (IT)
(74) Representative: Corradini, Corrado

(57) **Abstract**

The machine comprises a screw conveyor (10) having two screw augers (11) counter-rotating within corresponding channels (14) substantially adhering to the profile of the screws (12), and having an initial section (A) for the introduction and subsequent thrusting of the fibres; there is also provided a fibre feed device (20, 30) provided with rotary entrainment/mixing means (22, 31, 32) for the fibres and arranged to introduce the fibres into said initial section (A) of the screw conveyor (10), through an inlet port (17) the axis of which is perpendicular to the plane defined by the two axes of the screw augers (11).

## Description

This invention relates to a machine for forming mixtures of synthetic resin and reinforcing fibres, more precisely either for effecting only the first step (i.e. feeding reinforcing fibres into synthetic resin material), or for forming the entire mixture (feeding the fibres followed by mixing the fibres and resin together).

It has been known for some time that mixing mineral or synthetic fibres (in particular glass fibres) with synthetic resin can considerably improve its mechanical properties, in particular its tensile strength.

However, still unsolved technical problems exist which prevent the practical formation of said mixture of fibres and synthetic resin, in particular the intrinsic difficulty of manipulating masses formed from fibres of relatively large length (greater than 20 mm), given that these tend to bind together to form soft tangled heaps which are poorly slidable.

In the current state of the art long fibres pre-impregnated with thermosetting synthetic resin are used in compression moulds, where they are manipulated in the form of matting or blankets.

Use is also made of so-called "poltrusion" processes and centrifuging processes on long impregnated fibres, in particular to form poles for public lighting.

These are in any event a relatively complicated technologies, requiring relatively lengthy specific operating times.

It is also known to use short fibres (of length less than 10 mm) mixed into a mass of synthetic resin (either thermosetting or thermoplastic), these being fed, in the form of regular homogeneous short fibres, into conveyors with co-rotating screws, where they are mixed with the synthetic resin material in the fluid state.

With this technology, mixtures containing only short fibres can be formed having a thus proportionally low mechanical strength; in addition, the costs of the fibres and their processing (for preparing said regular homogeneous fibres to be mixed into the resin) are relatively high.

An object of this invention is to provide a machine able to effectively introduce reinforcing fibres of relatively large length (greater than 20 mm), to form a mixture with synthetic resin material.

A further object of the invention is to provide a machine able to effectively use long non-homogeneous reinforcing fibres, in particular fibres deriving from the recovery and crushing of thermosetting material, or material in the from of masses of fibres of different lengths and thicknesses.

A further object of the invention is to provide a machine able to effectively feed continuous reinforcing fibres (of indeterminate length) to form a mixture with synthetic resin material.

A further object of the invention, in one of its embodiments, is to provide a machine able to completely form a mixture of synthetic resin and reinforcing fibres and also to directly feed this mixture to a forming unit, such as an extrusion head, an injection mould, a compression mould, etc.

These and other objects and further advantages are attained by the invention as characterised in the claims.

The invention is based on the fact of comprising a screw conveyor having two screw augers counter-rotating within corresponding channels substantially adhering to the double profile of the screws, and having an initial section for the introduction and subsequent thrusting of the fibres; and further comprising a fibre feed device provided with rotary entrainment/mixing means for the fibres and arranged to feed the fibres into said initial section of the screw conveyor, through an inlet port the axis of which is perpendicular to the plane defined by the two axes of the screw augers; furthermore, the screw conveyor is connected, at the downstream end of said initial section, to a conveyor member arranged to convey fluid synthetic resin material into which it thrusts the fibres received from the feed device.

The invention is described in detail hereinafter with the aid of the accompanying figures, which illustrate one embodiment thereof by way of non-limiting example.

Figure 1 is a perspective view of the machine of the invention.

Figure 2 is a section on the axial vertical plane of Figure 1.

Figure 3 is a plan view of Figure 2 from above.

Figure 4 is a section on the plane IV-IV of Figure 2.

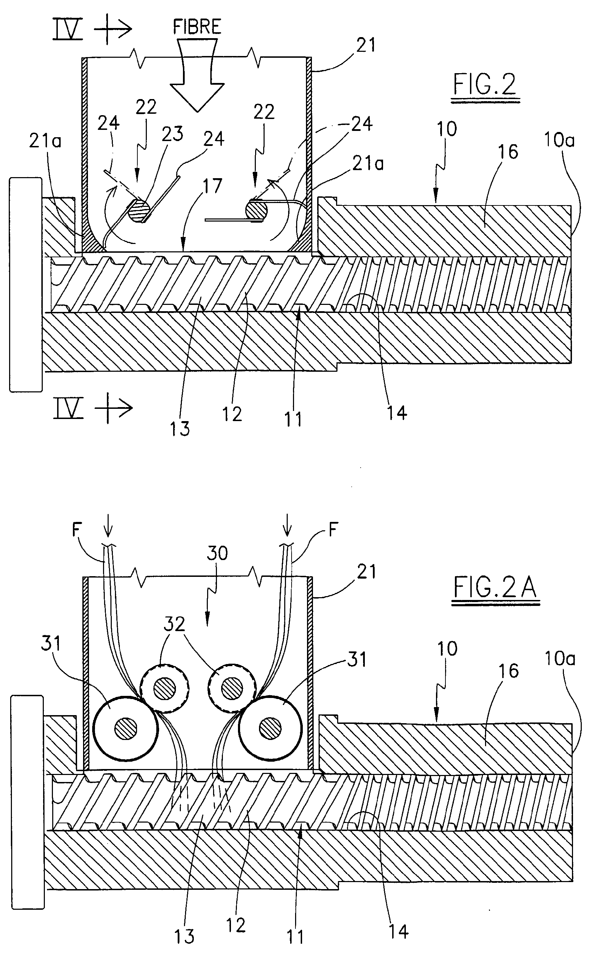

Figure 2A is a section as Figure 2, comprising a different embodiment of the feed device.

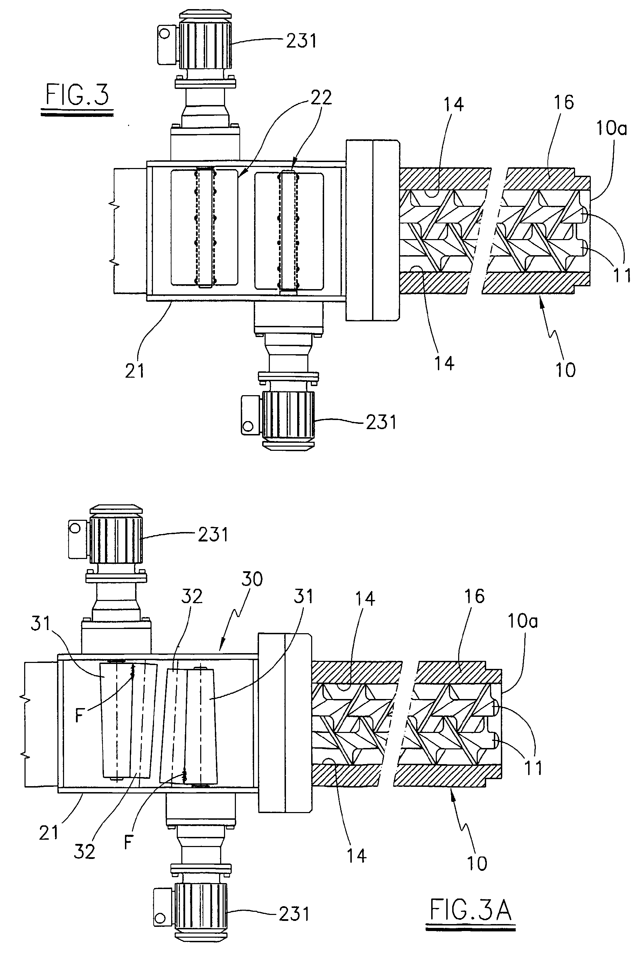

Figure 3A is a plan view of Figure 2A from above.

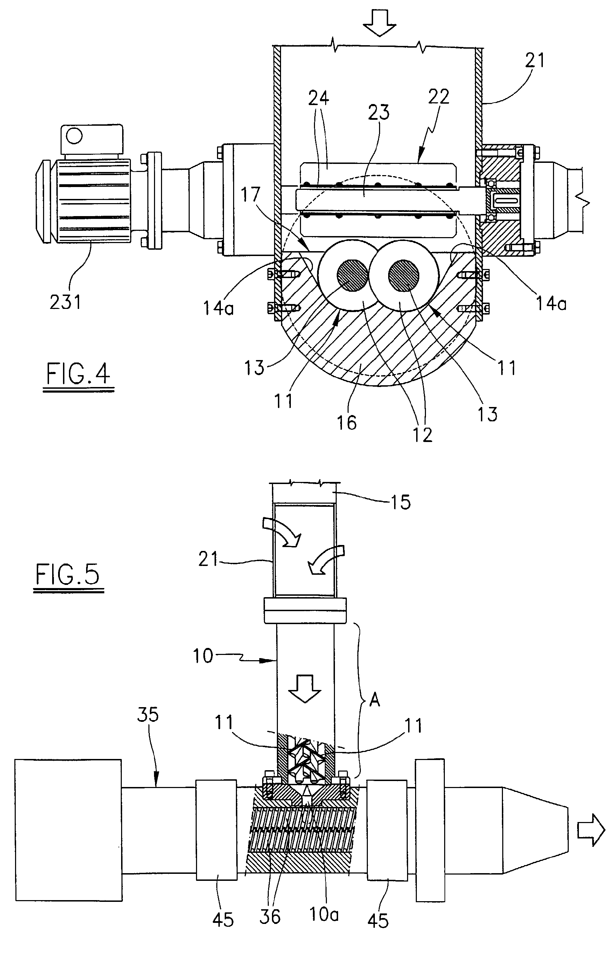

Figure 5 is a plan view from above of a different embodiment of the machine, capable of effecting the mixing with synthetic resins.

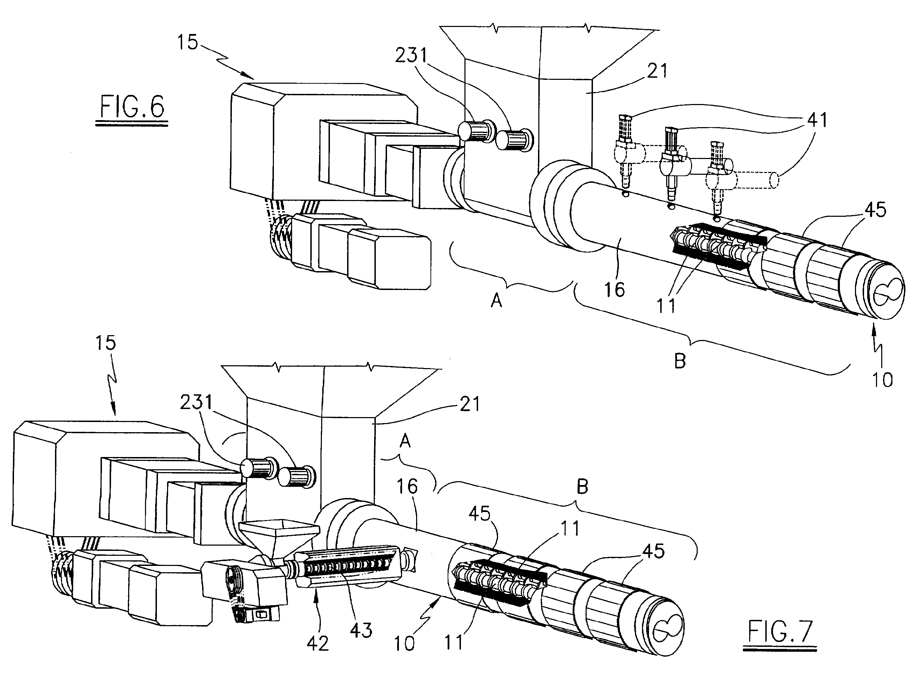

Figure 6 is a perspective view of a further embodiment of the machine, capable of effecting the mixing with synthetic resins.

Figure 7 is a perspective view of a further embodiment of the machine, capable of effecting the mixing with synthetic resins.

The machine of the invention comprises a screw conveyor 10 having two screw augers 11, each of which comprises a shaft 13 about which a screw 12 winds; the shaft axes are parallel and are positioned in the same horizontal plane; the profiles of the screws 12 intersect in a central portion, without (obviously) touching the shafts 13. Of the two augers 11, one is right-handed and the other left-handed, they counter-rotating to convey the material in the same direction; the direction of rotation is such that the screws 12 rotate upwards in the central portion (in which the profiles intersect). The two shafts 13 are both motorized by a drive unit (indicated overall by 15).

The augers 11 are inserted into corresponding cylindrical channels 14, the surface of which substantially adheres to the profile of the corresponding screw 12 with the exception of the central portion where the two channels intersect. The two channels 14 are provided within a solid cylindrical body 16.

The initial (upstream) section, indicated by A, of the conveyor 10 is used for the introduction and subsequent thrusting of the fibres and comprises an inlet port 17 provided in the two channels 14 in the rear region of the cylindrical body 16, for introducing the fibrous material into the channels 14, and having its axis perpendicular to the plane defined by the two axes of the screw augers 11. Preferably, at the port 17 the channels 14 possess two lateral sides 14a (see Figure 4) which diverge slightly outwards and upwards to facilitate entry of the fibres into the channels.

Above the port 17 there is positioned a fibre feed device 20 comprising a hopper 21 of substantially vertical axis to receive and contain a mass of the fibrous material.

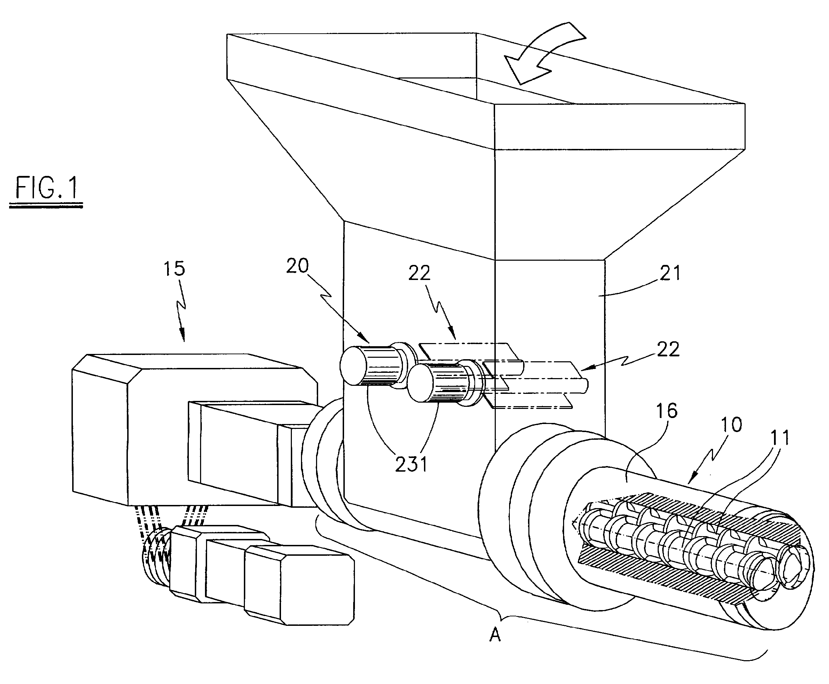

Figures 1-4 show a first embodiment of the device 20.

According to an important characteristic of the invention, the device 20 is provided with rotary entrainment/mixing means 22 for the fibres and arranged to feed the fibres into said initial section A of the screw conveyor 10, through the inlet port 17.

In particular, there is provided at least one rotary means 22, positioned upstream of and close to the inlet port 17 of the screw conveyor, and having at least one blade 24 rotated about an axis parallel to the plane defined by the two axes of the screw augers 11, in order to move/mix the fibre mass fed into the hopper for its introduction through the inlet port 17.

In the particular preferred embodiment shown in the figures, the feed device 20 comprises two rotary means 22 with their axes horizontal and parallel, they each comprising a shaft 23 driven by a respective motor 231 and carrying at least one, preferably two, elastic blades 24. The hopper 21 possesses downwardly converging walls and vertical walls, said blades 24 having a length such as to interfere at their ends with the lower portion 21a of the hopper 21, the internal profile of which is appropriately arched to maintain a constant distance from the shaft 23. During rotation, the blades 24 flex when they interfere with said lower portion 21a (as shown by continuous lines in Figure 2) and then elastically resume their normal profile (as shown by dashed lines in Figure 2) when they rise higher, where they lie immersed in the mass of fibrous material held in the hopper 21.

In operation, the mass of material formed from fibres (possibly together with inert fillers in powder or small particle form) is fed in bulk into the hopper 21, through which it tends to descend by gravity via the port 17 and into the free spaces of the channels 14, i.e. between the turns of the screws 12 about the shafts 13. Because of its nature, this fibrous material would not be able to descend through the port 17 by gravity alone, because the fibres tend to tangle and hence form bridges above the port which would block descent of the material; however, this drawback is overcome by the rotary means 22 the action of which is particularly effective in breaking these bridges and exerting a thrust facilitating descent of the fibres; of particular importance in this respect is the fact that the blades flex against the lower portion 21a of the hopper, and then in resuming their proper shape repeatedly strike (as a loaded spring) the fibrous mass accumulated in that region above the port 17, to move it and mix it, with an effectiveness which, as has been found experimentally, greatly facilitates fibre descent through the port 34.

By virtue of the described characteristics, the fibres then descend into the initial section A of the conveyor 10, to become distributed and fill the free spaces between the turns of the screws 12; here the rotation of the screws 12 firstly rotates the fibres on the outer surfaces of the channels 14 and then in their lower part, and finally, on encountering a closed part of the channel 14, the rotation of the screws 12 causes the material to advance in an axial direction.

Figures 2A and 3A show a second embodiment of the fibre feed device, for the case in which continuous fibres F of indeterminate length (typically roving) are fed to the conveyor 10.

In this case the feed device (indicated overall by 30) comprises at least one motorized pair of rollers 31, 32 arranged to entrain continuous fibres of indeterminate length to feed them to the screw conveyor through the inlet port 17. In particular, the feed device 30 comprises two motorized pairs of rollers 31, 32, each of which comprises a drive roller 31 of frusto-conical shape and a counteracting idle roller 32, to divide the fibres along two streams directed towards the two outer sides of the channels 14. In detail, by virtue of the conical shape of the roller 31 each pair of rollers 31, 32 thrusts the respective fibres F towards the region in which the diameter of the roller 31 is greatest, the two pairs 31, 32 being arranged such that the two fibre streams F withdraw from each other to arrive above the outer sides of the channels 14.

In both the aforedescribed embodiments, the profile and dimensions of the screws 12 are such as to favour the described movements of the fibres within the channels 14 and preferably such as to prevent lamination and/or tearing of the fibres, in order to preserve their initial length as much as possible.

Moreover, preferably, that portion of the screw 12 downstream of the inlet port 17 is of decreasing pitch, or of increasing thickness, to reduce the volume of the free spaces between the turns and to gradually increase the degree of contraction of the fibrous material while this material is being thrust downstream.

The screw conveyor 10 is connected, at the downstream end of said initial section A, to another conveyor member arranged to convey fluid synthetic resin material into which it thrusts the fibres received from the feed device 20, 30.

In the embodiment shown in Figure 5, the screw conveyor 10 possesses only said initial section A for the introduction and axial thrusting of the fibres, this being connected at its downstream end 10a to an intermediate point of a second conveyor 35 (of known type) for conveying plastic material, in particular having two co-rotating screw augers 36 and having its axis perpendicular to the first conveyor 10 (of known type).

This embodiment serves typically for forming mixtures with thermoplastic resins, the conveyor 10 acting as the means for injecting fibres into the second conveyor 35.

A thermoplastic resin is fed into the conveyor 35 in known manner, and is heated and fluidized within it. At an intermediate point, this resin receives the fibres introduced by the conveyor 10, these fibres being mixed in the next portion by the action of the screw augers 36, this mixture then being introduced into a forming unit positioned downstream (of known type, not show in the figures), such as an extrusion head, an injection mould, a compression mould, etc., or is solidified and reduced to granules to be stored and later used as raw material.

In the embodiment shown in Figures 5 and 6, downstream of the fibre introduction and thrusting section A, the screw conveyor 10 proceeds to define a further section B into which synthetic resin material in the fluid state is injected. In particular, this further conveyor section B is arranged to mix the fluid material and fibres simultaneously with their advancement, to render the mixture more homogeneous.

The embodiment of Figure 6 serves for forming a mixture with thermosetting resins.

The resin is introduced herein, at ambient temperature in a substantially liquid state, into the section B of the conveyor 10, by simple injectors 41 (known per se) fed by pumps (of known type, not shown in the figures), to form within the section B a mixture comprising from 50% to 98% of fibres. The section B comprises a portion in which the screws are shaped to achieve effective mixing such as to render the fibre-resin mixture more homogeneous, followed by a portion in which the screws are shaped to provide an effective axial thrust.

The embodiment of Figure 7 serves for forming a mixture with thermoplastic resins.

A second screw conveyor 42 (known per se) for conveying thermoplastic material is provided, in particular having a single screw auger 43. The conveyor 42 has its axis perpendicular to the first conveyor 10, and is connected at its downstream end to a point on said conveying section B of the first conveyor, to feed into an intermediate point thereof thermoplastic synthetic resin material in the fluid state, such as to form a mixture comprising from 50% to 98% of fibres. Again in this case, the section B comprises a portion in which the screws are shaped to achieve effective mixing such as to render the fibre-resin mixture more homogeneous, followed by a portion in which the screws are shaped to provide an effective axial thrust.

In both cases, downstream of the section B of the conveyor, there is advantageously provided a forming unit, such as an extrusion head, an injection mould, a compression mould, etc.

In the various illustrated embodiments, suitable conditioning units 45 can be provided, depending on the type of resin processed and the operations performed, to render/maintain the resin sufficiently fluid; in particular, in those cases in which thermoplastic resin is processed the units 45 are used for heating, whereas in the case of thermosetting resin the units 45 are used for cooling.

By virtue of the invention, mixtures of resins and fibres can be formed in which the fibres maintain their relatively long length, using relatively simple machines and simple, fast operations.

Moreover, the fibrous material fed to the inlet port 17 can be non-homogeneous material (fibres of different lengths and dimensions, arranged in a disordered manner), even deriving from processing (crushing, crumbling, shredding) of salvaged thermosetting material, this being of great economical advantage.

Furthemore, immediately downstream of the whole procedure involving fibre addition and its mixing with synthetic resin, the mixture obtained can be introduced directly into a forming unit, without further treatment or passage through other machines.

Articles based on fibre-filled thermosetting resins can also be formed, by extrusion or injection.

Numerous modifications of a practical and applicational nature can be made to the invention, but without departing from the scope of the inventive idea as claimed below.

## Claims

1. A machine for feeding reinforcing fibres to form a mixture with synthetic resin material, characterised by comprising:
a screw conveyor (10) having two screw augers (11) counter-rotating within corresponding channels (14) substantially adhering to the profile of the screws (12), and having an initial section (A) for the introduction and subsequent thrusting of the fibres;
a fibre feed device (20, 30) provided with rotary entrainment/mixing means (22, 31, 32) for the fibres and arranged to introduce the fibres into said initial section (A) of the screw conveyor (10), through an inlet port (17) the axis of which is perpendicular to the plane defined by the two axes of the screw augers (11).

2. A machine as claimed in claim 1, characterised in that said screw conveyor (10) is connected, at the downstream end of its initial section (A), to a conveyor member arranged to convey fluid synthetic resin material, into which it thrusts the fibres received from the feed device (10).

3. A machine as claimed in claim 1, characterised in that the fibre feed device (20) comprises at least one rotary means (22), positioned upstream of and close to the inlet port (17) of the screw conveyor (10), and having at least one rotated blade (24) for moving/mixing the fibre mass introduced through the inlet port (17).

4. A machine as claimed in claim 3, characterised in that the fibre feed device (20) comprises a hopper (21) of substantially vertical axis, positioned on the inlet port (17) provided on the upper region of the screw conveyor (10) for introducing the fibrous material into this latter, the rotary means comprising elastic blades (24) rotating about an axis parallel to the plane defined by the two axes of the screw augers (11), said blades (24) having a length such as to interfere, at their ends, with the lower portion (21a) of the hopper (21) such that, during rotation, they flex when they interfere with said lower portion (21a), and then elastically resume their normal profile when they lie immersed in the mass of fibrous material contained in the hopper (21).

5. A machine as claimed in claim 4, characterised in that the fibre feed device (20) comprises two rotary means (21) with their axes horizontal and parallel, each of which carries two elastic blades (24).

6. A machine as claimed in claim 1, characterised in that the fibre feed device (30) comprises at least one motorized pair of rollers (31, 32) arranged to entrain continuous fibres of indeterminate length to feed them to the screw conveyor through the inlet port.

7. A machine as claimed in claim 6, characterised in that the fibre feed device (30) comprises two motorized pairs of rollers (31, 32), one (31) of which is a drive roller of frusto-conical shape, they being arranged to divide the fibres along two streams directed towards the two outer sides of the channels (14).

8. A machine as claimed in claim 2, characterised in that the screw conveyor (10) is connected, at its downstream end (10a) to an intermediate point of a second conveyor (35) arranged to convey plastic material and having its axis perpendicular to the first conveyor (10).

9. A machine as claimed in claim 2, characterised in that downstream of the initial fibre introduction and thrusting section (A), the screw conveyor (10) proceeds to define a further conveying section (B) into which synthetic resin material in the fluid state is injected.

10. A machine as claimed in claim 9, characterised in that said further conveyor section (B) is arranged to mix the fluid material and fibres simultaneously with their advancement, to render the mixture more homogeneous.

11. A machine as claimed in claim 9, characterised by comprising, for conveying plastic material, a second screw conveyor (42) having its axis perpendicular to the first conveyor, and connected at its downstream end to a point on said further conveying section (B) of the first conveyor (10), to feed into this latter synthetic resin material in the fluid state.
